# EUROPEAN PATENT SPECIFICATION

(11) **EP 2 632 625 B1**
(45) Date of publication and mention of the grant of the patent: **27.01.2021**
(21) Application number: 10859038.1
(22) Date of filing: 28.10.2010
(51) Int. Cl.: B23K 9/127, B23K 9/02, B23K 9/173, B23K 9/18, B23K 9/028, B23K 101/06

(54) **WELDING DEVICE**
SCHWEISSVORRICHTUNG
DISPOSITIF DE SOUDAGE

(43) Date of publication of application: 04.09.2013
(73) Proprietor: ESAB AB, 402 77 Göteborg (SE)
(72) Inventor: LARSSON, Håkan, S-695 32 Laxå (SE); RAJALA, Pasi, S-695 32 Laxå (SE)
(74) Representative: Bjerkéns Patentbyrå KB (Stockholm)
(86) International application number: PCT/SE2010/051173
(87) International publication number: WO 2012/057664

(56) References cited:
- WO-A1-2010/080057
- WO-A1-2010/080057
- WO-A1-2010/080057
- CN-Y- 201 250 512
- GB-A- 2 280 761
- GB-A- 2 280 761
- US-A1- 2004 144 192

## Description

### THE BACKGROUND OF THE INVENTION AND PRIOR ART

The present invention relates generally to automatic precision welding. More particularly the invention relates to a welding device according to the preamble of claim 1.

Technical solutions for automatic welding have been known for decades. In many cases, the joints into which the weld material is applied are straight, and the work pieces perhaps inclined edges towards the joint. In such cases it is normally a straightforward task to weld together the work pieces in question. However, sometimes the welding becomes a more challenging undertaking, for example if the joint is circular, and/or very narrow. US-4,517,438 describes a rotary arc-welding apparatus having a rotatable nozzle for directing a consumable welding electrode toward a groove formed between objects of welding. The design includes a spring and brush arrangement to allow a rotating mechanism to rotate the nozzle about an axis at high speed so as to cause a circular movement of an arc from the tip of the consumable electrode. Hence, the apparatus is suitable for welding pipes and the like.

WO-2010/080057 discloses the preamble of claim 1 and describes a welding device for applying weld material between two work pieces so as to connect the work pieces mechanically with one another. GB-2280761 relates to a welding robot for automatic welding of pipes.

### PROBLEMS ASSOCIATED WITH THE PRIOR ART

It is normally a complex task to weld in narrow gaps, i.e. where the work pieces' edges towards the joint constitute essentially parallel surfaces, and these surfaces are located close to one another. This is especially true if the joint is curved. The above

US-patent US-4,517,438 presets a solution for welding circular joints having a radius, which allows the passage of the nozzle through the groove between the objects to be joined. However, there is yet no general solution for welding in narrow circular gaps with very small radii, or in narrow and curved gaps having non-circular outlines.

### SUMMARY OF THE INVENTION

The object of the present invention is therefore to alleviate the above problems and offer a flexible and cost efficient solution for applying weld material in curved and narrow joints.

According to the invention, the object is achieved by a welding device according to claim 1.

This welding device is advantageous because the design allows automatic welding in very narrow joints having circular, as well as non-circular curved, outlines.

According to a first option of the invention, the first adjustment means are associated with control means configured to lock the probe head relative to the welding head at a particular angle with respect to the first axis. Hence, the welding device can be conveniently optimized for welding circular joints having a certain radius.

According to this option the first adjustment means includes manually controllable setting means configured to define the particular angle at which the probe head is locked relative to the welding head with respect to the first axis. Such an uncomplicated and cost efficient design is desirable when the requirements for quick adaptivity are relatively low.

According to a second option of the invention, the welding device includes automatic control means configured to control the first adjustment means in response to a master signal, being based on the set of geometric properties measured by the probe head. Thereby, during the transport of the welding device along the operating direction, an angular relationship between the probe head and the welding head may be varied adaptively with respect to the angle relative to the first axis. Naturally, this is advantageous when welding relatively complex curved joints, for instance with non-circular outlines.

According to a preferred embodiment of the invention, the probe head includes two primary sensor members configured to register data representing at least a subset of the set of geometric properties of the gap between the work pieces. Each primary sensor member is here specifically configured to be in contact with a respective wall of the two work pieces adjoining the gap during the transport of the welding device along the operating direction. Thereby, for example a respective distance between a welding electrode and each of the work pieces can be calculated.

According to a further preferred embodiment of the invention, a proximal end of each primary sensor member is pivotably attached to a central element of the probe head. Moreover, each primary sensor member includes a distal end, and the probe head includes at least one resilient member configured to exert a repelling force on the primary sensor members relative to one another, so as to cause the distal ends thereof to maintain contact with the respective adjoining wall during the transport of the welding device along the operating direction while allowing variation of the lateral distances between an electrode of the probe head and the adjoining walls. Thus, the geometric properties of the gap between the work pieces can be determined in a robust and reliable manner.

According to another preferred embodiment of the invention, the probe head includes optical sensor means configured to contactlessly register data representing at least a subset of the set of geometric properties of the gap between the work pieces. For many applications, this is a viable alternative, or complement, to the above-mentioned mechanical sensor members.

According to yet another preferred embodiment of the invention, the welding device includes second adjustment means configured to rotate the probe head relative to the welding head around a second axis, such that the welding head attains a tilt angle relative to the probe head. The second axis is oriented essentially parallel to the welding plane (i.e. essentially perpendicular to the first axis). Consequently, the welding action can be conveniently aimed at different areas inside the joint, for example to apply different weld beads therein.

According to still another preferred embodiment of the invention, the welding device includes a flux channel configured to apply flux in the gap between the work pieces. The flux channel has an outlet, which is arranged upstream of the welding head and downstream of the probe head relative to the operating direction. Thus, adequate amounts of flux can be applied without risk interfering with the measurement of joint profile's geometric properties.

According to a further preferred embodiment of the invention, the welding head is configured to administer the supply of at least one consumable electrode wire into the gap between the work pieces. Consequently, the welding process can be made highly efficient. It is also rendered possible to further adapt the welding to the specific properties of the joint.

Generally, the invention is beneficial because it enables high-precision welding in narrow joints with steep edges. The solution is therefore well suited for welding of reactor tanks and other demanding junctions of thick metal plates.

Additional advantages, advantageous features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates how a welding head and a probe head may be angled relative to one another according to the invention;
- Figure 2: illustrates how the proposed welding device may be used to apply welding material in a gap between two general work pieces;
- Figure 3a: shows a control means according to the first option of the invention;
- Figure 3b: shows a control means according to the second option of the invention;
- Figure 4: shows a specific example of how a welding device according to one embodiment of the invention can be used to join two work pieces;
- Figure 5: illustrates how a probe head according to one embodiment of the invention examines the gap between the work pieces to be joined;
- Figure 6: schematically illustrates how the welding head may be tilted relative to the probe head according to one embodiment of the invention; and
- Figure 7: shows a more detailed perspective view of the welding device in Figure 5.

### DESCRIPTION OF PREFERRED EMBODIMENTS OF THE INVENTION

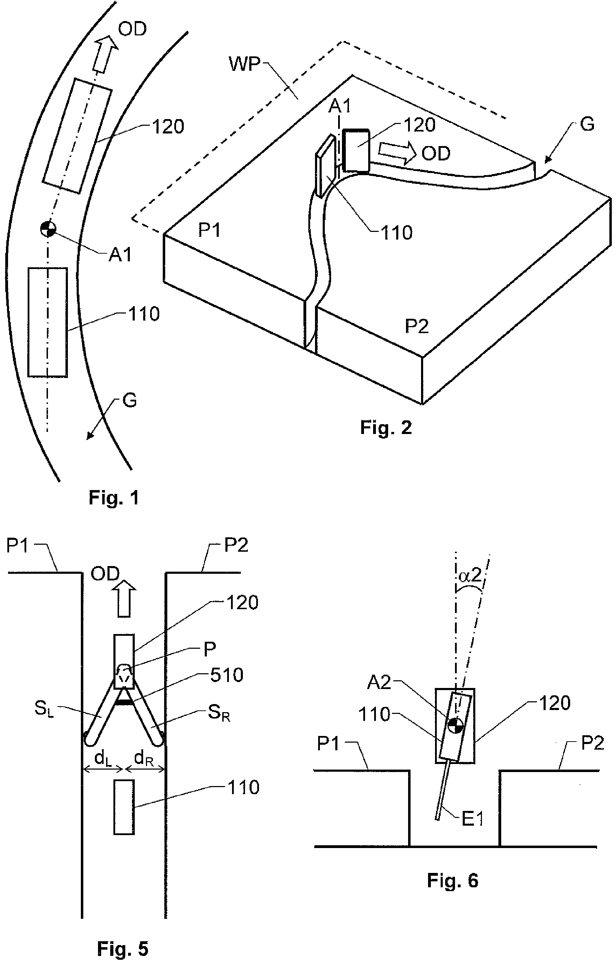

We refer initially to Figures 1 and 2. Figure 1 schematically illustrates how a welding head 110 and a probe head 120 may be angled relative to one another according to the invention, and Figure 2 shows a perspective view illustrating how this feature can be used to apply welding material in a curved gap G between two general work pieces P1 and P2.

The proposed welding device includes a welding head 110, a probe head 120 and first adjustment means. The welding head 110 is configured to perform a welding action in respect of the work pieces P1 and P2 during transport of the welding device along an operating direction OD in a welding plane WP. As a result, the two work pieces P1 and P2 become connected mechanically with one another. The welding plane WP is here an imaginary surface containing the path followed by the welding device. Provided that the work pieces P1 and P2 are flat, the welding plane WP is typically essentially parallel to the top surfaces of the work pieces P1 and P2.

The probe head 120 is arranged upstream of the welding head 110 relative to the operating direction OD. Further, the probe head 120 is configured to measure a set of geometric properties of a gap G between the work pieces P1 and P2, for example the width of the gap G and/or an estimated respective distance between a welding electrode and each of the work pieces P1 and P2 respectively. Thus, based on the set of geometric properties, it is possible to position the welding head 110 in the gap G so that a desired application of the weld material in the gap G is attained.

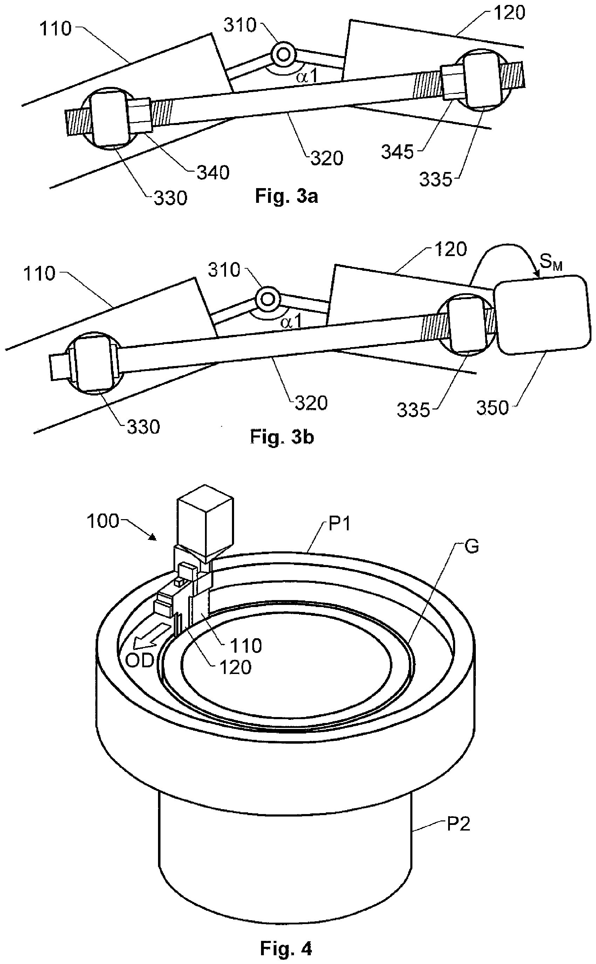

The first adjustment means preferably includes a joint (e.g. represented by a hinge or a pivot) and are configured to allow a position of the probe head 120 relative to a position of the welding head 110 to be varied angularly by rotating at least one of the probe head 120 and the welding head 110 around a first axis A1 oriented essentially perpendicular to the welding plane WP. The first adjustment means will now be described in further detail with reference to Figures 3a and 3b.

Figure 3a shows the first adjustment means having a joint 310 and a control means according to the first option of the invention. The first axis A1 passes through the joint 310, which allows the welding head 110 to be angled in relation to the probe head 120 as described above. Moreover, the first adjustment means are associated with control means 320 330 335, 340 and 345 configured to lock the probe head 120 relative to the welding head 110 at a particular angle α1 with respect to the first axis A1. Here, the control means include a rod 320, flexible attachment points 330 and 335 on the welding head 110 and the probe head 120 respectively and locking bolts 340 and 345. The rod 320 interconnects the flexible attachment points 330 and 335, and the locking bolts 340 and 345 are arranged on the rod 320 to enable the distance between the probe head 120 and the welding head 110 to be fixed, such that the angle α1 there between attains a particular value. The locking bolts 340 and 345 are manually controllable via a suitable tool, for instance a torque wrench.

Figure 3b shows a control means according to the second option of the invention. The design is here essentially the same as that in Figure 3a. However, according to the second embodiment, the welding device includes automatic control means, such as an electric motor 350. The electric motor 350 is arranged on the rod 320 and is configured to rotate the rod 320, so that in response thereto the first angle α1 of the first adjustment means 310 varies. The electric motor 350, in turn, is controlled in response to a master signal S_{M}, which is preferably based on the set of geometric properties measured by the probe head 120. Consequently, during the transport of the welding device along the operating direction OD, the automatic control means may adaptively adjust the angular relationship between the probe head 120 and the welding head 110, such that this relationship varies with respect to the angle α1 relative to the first axis A1 in a manner being adapted to the properties of the gap G. If the angle α1 is to attain values over 180° (to handle curves in the opposite direction) auxiliary control means (not shown) in addition to the rod 320 and the electric motor 350 may be required.

Figure 4 shows a specific example where a welding device 100 according to one embodiment of the invention is used to join two work pieces P1 and P2 in the form of a coupling piece and a pipe respectively. In this case, since the gap G between the work pieces P1 and P2 has a constant radius, the probe head 120 is preferably locked relative to the welding head 110 at a particular angle α1 with respect to the first axis A1 according to the first embodiment above. Nevertheless, a design according to the second embodiment is equally well applicable also here.

Figure 5 illustrates how the probe head 120 according to one embodiment of the invention is configured to examine the gap G between two work pieces P1 and P2 to be joined. The probe head 120 of this embodiment includes two primary sensor members S_{R} and S_{L} that are configured to register data representing at least a subset of the above-mentioned set of geometric properties of the gap G between the work pieces P1 and P2. During the transport of the welding device along the operating direction OD, each of the primary sensor members S_{R} and S_{L} is configured to be in physical contact with a respective wall W1 and W2 of the two work pieces P1 and P2, which walls W1 and W2 adjoin the gap G.

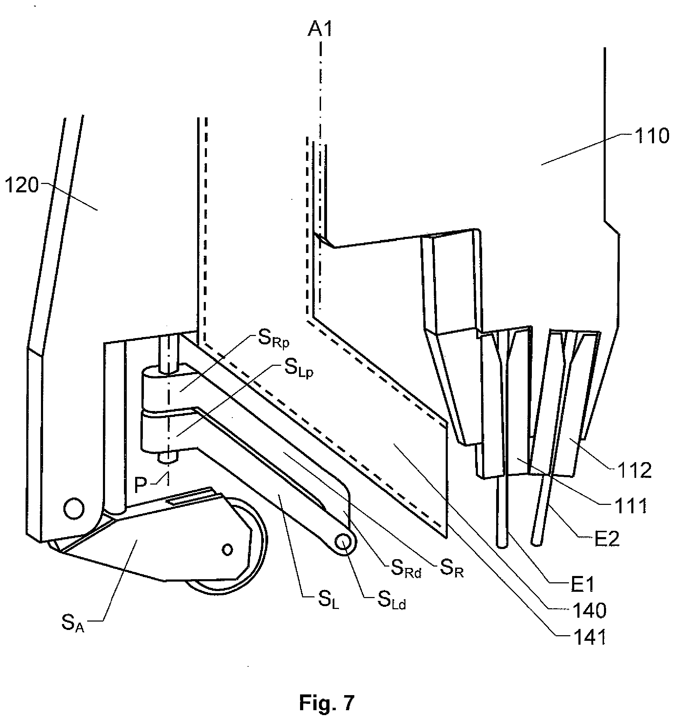

To this aim, a proximal end S_{Rp} and S_{Lp} respectively of each of the primary sensor members S_{R}, and S_{L} is preferably pivotably attached to a central element of the probe head 120 via a pivot axis P. Each of the primary sensor members S_{R} and S_{L} has a distal end S_{Rd} and S_{Ld} respectively. Further, at least one resilient member 510 is arranged to exert a repelling force on the primary sensor members S_{R} and S_{L} relative to one another. As a result, the distal ends S_{Rd} and S_{Ld} are separated by rotation of the primary sensor members S_{R} and S_{L} around the pivot axis P, and the distal ends S_{Rd} and S_{Ld} are brought to maintain contact with the respective adjoining wall W1 and W2 during the transport of the welding device along the operating direction OD. At the same time, lateral distances d_{R} and d_{L} respectively may be varied between an electrode E1 (see Figures 6 and 7) of the probe head 120 and the adjoining walls W1 and W2 depending on the geometric characteristics of the gap G and how the welding device's path therein is controlled.

For optimal welding in larger joints (i.e. where the gap G is relatively wide and/or deep), it is generally preferable if the welding head 110 may be tilted relative to a position of the probe head 120 during the welding process, such that weld material can be applied in a tailored manner to specific areas within the joint depending on the geometric properties of joint and/or where any previous weld beads have already been applied. Figure 6 schematically illustrates how the welding head 110 may be tilted relative to the probe head 120 according to one embodiment of the invention, and thus reach specific areas within the joint. According to this embodiment, the welding device has second adjustment means (not shown), which second adjustment means are configured to rotate the probe head 120 relative to the welding head 110 around a second axis A2, such that the welding head 110 attains a tilt angle α2 relative to the probe head 120. The second axis A2 is here oriented essentially parallel to the welding plane WP, i.e. essentially perpendicular to the first axis A1.

Figure 7 shows a more detailed perspective view of the welding device 100 in Figure 5. As can be seen, the welding device 100 includes the mechanical type of primary sensor members S_{R} and S_{L} described above with reference to Figure 5. According to one embodiment of the invention, however, the probe head 120 is instead equipped with optical sensor means configured to contactlessly register data representing at least a subset of the set of geometric properties of the gap G between the work pieces P1 and P2. The optical sensor means preferably include a powerful light source in the form of a LED (light emitting diode) or a laser unit. Such optical sensor means are advantageous by rendering a reliable and compact design possible. Acoustic sensor means may be used as yet another alternative, or complement.

To enable submerged arc welding, the welding device 100 may further include a flux channel 140 that is configured introduce flux into the gap G between the work pieces P1 and P2. The flux channel 140 has an outlet 141, which is arranged upstream of the welding head 110 and downstream of the primary sensor members S_{R} and S_{L} relative to the operating direction OD.

According one preferred embodiment of the invention, the welding head 110 is configured to administer the supply of one or more consumable electrode wires into the gap G between the work pieces P1 and P2. Figure 7 shows two such electrode wires E1 and E2. Thus, the welding head 110 is provided with at least two wire outputs 111 and 112 configured to feed out a respective electrode. The outputs 111 and 112 are preferably arranged such that a stick-out of a first electrode E1 is angled relative to a stick-out of a second electrode E2. Namely, thereby the welding process can be made highly efficient. It is also rendered possible to further adapt the welding to the specific properties of the joint.

The term "comprises/comprising" when used in this specification is taken to specify the presence of stated features, integers, steps or components. However, the term does not preclude the presence or addition of one or more additional features, integers, steps or components or groups thereof.

The reference to any prior art in this specification is not, and should not be taken as, an acknowledgement or any suggestion that the referenced prior art forms part of the common general knowledge in Australia, or any other country.

The invention is not restricted to the described embodiments in the figures, but may be varied freely within the scope of the claims.

## Claims

1. A welding device (100) for applying weld material between two work pieces (P1, P2) so as to connect the work pieces (P1, P2) mechanically with one another, the welding device (100) comprising:
a welding head (110) configured to perform a welding action in respect of the work pieces (P1, P2) during transport of the welding device (100) along an operating direction (OD) in a welding plane (WP), and
a probe head (120) arranged upstream of the welding head (110) relative to the operating direction (OD), the probe head (120) being configured to measure a set of geometric properties of a gap (G) between the work pieces (P1, P2) so as to enable positioning of the welding head (110) to attain a desired application of the weld material in the gap (G), wherein the welding device (100) comprises first adjustment means (310) configured to allow a position of the probe head (120) to be varied angularly relative to a position of the welding head (110) by rotating at least one of the probe head (120) and the welding head (110) around a first axis (A1) oriented essentially perpendicular to the welding plane (WP),
**characterized in that** the first adjustment means comprises a joint (310) and control means, wherein the first axis (A1) passes through the joint (310), the control means includes a rod (320) and interconnecting respective flexible attachment points (330, 335) on the welding head (110) and the probe head (120),
wherein
the control means further comprises locking bolts (340, 345) arranged on the rod (320) and being manually controllable via a suitable tool to enable the distance between the probe head (120) and the welding head (110) to be fixed, and thereby-to lock the probe head (120) relative to the welding head (110) at a particular angle (α1) with respect to the first axis (A1),
or
the control means further comprises an electric motor (350) arranged on the rod (320) and configured to rotate the rod (320), in response to a master signal (Sₘ), the master signal (Sₘ) being based on the measured set of geometric properties of the gap (G), wherein rotation of the rod (320) varies the first angle (α1) of the first adjustment means (310).

2. The welding device (100) according to the second option of claim 1, wherein the electric motor (350) being suitable to adaptively adjust the angular relationship between the probe head (120) and the welding head (110) during transport of the welding device (100) along the operation direction (OD), such that this relationship varies with respect to the angle (α1) relative to the first axis (A1).

3. The welding device (100) according to any one of the preceding claims, wherein the probe head (120) comprises two primary sensor members (S_{R}, S_{L}) configured to register data representing at least a subset of the set of geometric properties of the gap (G) between the work pieces (P1, P2), each of the primary sensor members (S_{R}, S_{L}) being configured to be in contact with a respective wall (W1, W2) of the two work pieces (P1, P2) adjoining the gap (G) during the transport of the welding device (100) along the operating direction (OD).

4. The welding device (100) according to claim 3, wherein a proximal end (S_{Rp}, S_{Lp}) of each of the primary sensor members (S_{R}, S_{L}) is pivotably attached to a central element (125) of the probe head (120), each of the primary sensor members (S_{R}, S_{L}) comprising a distal end (S_{Rd}, S_{Ld}), the probe head (120) further comprising at least one resilient member (510) configured to exert a repelling force on the primary sensor members (S_{R}, S_{L}) relative to one another so as to cause the distal ends (S_{Rd}, S_{Ld}) to maintain contact with the respective adjoining wall (W1, W2) during the transport of the welding device (100) along the operating direction (OD) while allowing variation of lateral distances (d_{R}, d_{L}) between an electrode (E1) of the probe head (120) and the adjoining walls (W1, W2).

5. The welding device (100) according to any one of claims 1 to 2, wherein the probe head (120) comprises optical sensor means configured to contactlessly register data representing at least a subset of the set of geometric properties of the gap between the work pieces (P1, P2).

6. The welding device (100) according to any one of the preceding claims, comprising second adjustment means configured to rotate the welding head (110) relative to the probe head (120) around a second axis (A2) such that the welding head (110) attains a tilt angle (α2) relative to the probe head (120), the second axis (A2) being oriented essentially parallel to the welding plane (WP).

7. The welding device (100) according to any one of the preceding claims, comprising a flux channel (140) configured to apply flux in the gap (G) between the work pieces (P1, P2), the flux channel (140) having an outlet (141) which is arranged upstream of the welding head (110) and downstream of the probe head (120) relative to the operating direction (OD).

8. The welding device (100) according to any one of the preceding claims, wherein the welding head (110) further comprises at least one wire output (111, 112) that is configured to administer supply of at least one consumable electrode wire (E1, E2) into the gap (G) between the work pieces (P1, P2).

## Patentansprüche

1. Schweißvorrichtung (100) zum Auftragen von Schweißmaterial zwischen zwei Werkstücken (P1, P2), um die Werkstücke (P1, P2) mechanisch miteinander zu verbinden, wobei die Schweißvorrichtung (100) Folgendes umfasst:
einen Schweißkopf (110), der dafür ausgelegt ist, einen Schweißvorgang hinsichtlich der Werkstücke (P1, P2) während des Transports der Schweißvorrichtung (100) entlang einer Arbeitsrichtung (OD) in einer Schweißebene (WP) auszuführen, und
einen Sondenkopf (120), der relativ zu der Arbeitsrichtung (OD) stromaufwärts von dem Schweißkopf (110) angeordnet ist, wobei der Sondenkopf (120) dafür ausgelegt ist, einen Satz von geometrischen Merkmalen eines Spalts (G) zwischen den Werkstücken (P1, P2) zu messen, um eine derartige Positionierung des Schweißkopfs (110) zu ermöglichen, dass ein gewünschter Auftrag des Schweißmaterials in dem Spalt (G) erreicht wird, wobei die Schweißvorrichtung (100) ein erstes Einstellmittel (310) umfasst, das dafür ausgelegt ist, zu ermöglichen, dass eine Position des Sondenkopfs (120) relativ zu einer Position des Schweißkopfs (110) winkelmäßig verändert wird, indem wenigstens einer von dem Sondenkopf (120) und dem Schweißkopf (110) um eine erste Achse (A1) gedreht wird, die im Wesentlichen senkrecht zu der Schweißebene (WP) ausgerichtet ist,
**dadurch gekennzeichnet, dass** das erste Einstellmittel ein Gelenk (310) und ein Steuermittel umfasst, wobei die erste Achse (A1) durch das Gelenk (310) verläuft, wobei das Steuermittel eine Stange (320) umfasst und jeweilige flexible Befestigungspunkte (330, 335) an dem Schweißkopf (110) und dem Sondenkopf (120) miteinander verbindet,
wobei
das Steuermittel ferner Verriegelungsbolzen (340, 345) umfasst, die an der Stange (320) angeordnet sind und mittels eines geeigneten Werkzeugs manuell steuerbar sind, um zu ermöglichen, den Abstand zwischen dem Sondenkopf (120) und dem Schweißkopf (110) zu fixieren und dadurch den Sondenkopf (120) relativ zu dem Schweißkopf (110) in einem bestimmten Winkel (α1) in Bezug auf die erste Achse (A1) zu verriegeln,
oder
das Steuermittel ferner einen Elektromotor (350) umfasst, der an der Stange (320) angeordnet ist und dafür ausgelegt ist, die Stange (320) als Reaktion auf ein Mastersignal (Sₘ) zu drehen, wobei das Mastersignal (Sₘ) auf dem gemessenen Satz von geometrischen Merkmalen des Spalts (G) basiert, wobei die Drehung der Stange (320) den ersten Winkel (α1) des ersten Einstellmittels (310) verändert.

2. Schweißvorrichtung (100) nach der zweiten Option von Anspruch 1, wobei der Elektromotor (350) dafür eingerichtet ist, die Winkelbeziehung zwischen dem Sondenkopf (120) und dem Schweißkopf (110) während des Transports der Schweißvorrichtung (100) entlang der Arbeitsrichtung (OD) adaptiv einzustellen, sodass sich diese Beziehung in Bezug auf den Winkel (α1) relativ zu der ersten Achse (A1) ändert.

3. Schweißvorrichtung (100) nach einem der vorhergehenden Ansprüche, wobei der Sondenkopf (120) zwei primäre Sensorglieder (S_{R}, S_{L}) umfasst, die dafür ausgelegt sind, Daten aufzuzeichnen, die wenigstens einen Subsatz des Satzes von geometrischen Merkmalen des Spalts (G) zwischen den Werkstücken (P1, P2) repräsentieren, wobei jedes der primären Sensorglieder (S_{R}, S_{L}) dafür ausgelegt ist, während des Transports der Schweißvorrichtung (100) entlang der Arbeitsrichtung (OD) in Kontakt mit einer jeweiligen Wand (W1, W2) der zwei Werkstücke (P1, P2) zu sein, die an den Spalt (G) angrenzen.

4. Schweißvorrichtung (100) nach Anspruch 3, wobei ein proximales Ende (S_{Rp}, S_{Lp}) von jedem der primären Sensorglieder (S_{R}, S_{L}) schwenkbar an einem mittigen Element (125) des Sondenkopfs (120) angebracht ist, wobei jedes der primären Sensorglieder (S_{R}, S_{L}) ein distales Ende (S_{Rd}, S_{Ld}) umfasst, wobei der Sondenkopf (120) ferner wenigstens ein elastisches Glied (510) umfasst, das dafür ausgelegt ist, eine abstoßende Kraft auf die primären Sensorglieder (S_{R}, S_{L}) relativ zueinander auszuüben, um die distalen Enden (S_{Rd}, S_{Ld}) zu veranlassen, während des Transports der Schweißvorrichtung (100) entlang der Arbeitsrichtung (OD) den Kontakt mit der jeweiligen angrenzenden Wand (W1, W2) aufrechtzuerhalten, während eine Veränderung der seitlichen Abstände (d_{R}, d_{L}) zwischen einer Elektrode (E1) des Sondenkopfs (120) und den angrenzenden Wänden (W1, W2) ermöglicht wird.

5. Schweißvorrichtung (100) nach einem der Ansprüche 1 bis 2, wobei der Sondenkopf (120) ein optisches Sensormittel umfasst, das dafür ausgelegt ist, kontaktlos Daten aufzuzeichnen, die wenigstens einen Subsatz des Satzes von geometrischen Merkmalen des Spalts (G) zwischen den Werkstücken (P1, P2) repräsentieren.

6. Schweißvorrichtung (100) nach einem der vorhergehenden Ansprüche, umfassend ein zweites Einstellmittel, das dafür ausgelegt ist, den Schweißkopf (110) relativ zu dem Sondenkopf (120) um eine zweite Achse (A2) zu drehen, sodass der Schweißkopf (110) einen Neigungswinkel (α2) relativ zu dem Sondenkopf (120) erreicht, wobei die zweite Achse (A2) im Wesentlichen parallel zu der Schweißebene (WP) ausgerichtet ist.

7. Schweißvorrichtung (100) nach einem der vorhergehenden Ansprüche, umfassend einen Flussmittelkanal (140), der dafür ausgelegt ist, ein Flussmittel in dem Spalt (G) zwischen den Werkstücken (P1, P2) aufzutragen, wobei der Flussmittelkanal (140) einen Auslass (141) aufweist, der relativ zu der Arbeitsrichtung (OD) stromaufwärts von dem Schweißkopf (110) und stromabwärts von dem Sondenkopf (120) angeordnet ist.

8. Schweißvorrichtung (100) nach einem der vorhergehenden Ansprüche, wobei der Schweißkopf (110) ferner wenigstens einen Drahtausgang (111, 112) umfasst, der dafür ausgelegt ist, die Zufuhr von wenigstens einem abschmelzbaren Elektrodendraht (E1, E2) in den Spalt (G) zwischen den Werkstücken (P1, P2) zu verwalten.

## Revendications

1. Dispositif de soudage (100) pour appliquer un matériau de soudage entre deux pièces à usiner (P1, P2) de manière à connecter les pièces à usiner (P1, P2) l'une à l'autre mécaniquement, le dispositif de soudage (100) comprenant :
une tête de soudage (110) configurée pour effectuer une action de soudage par rapport aux pièces à usiner (P1, P2) pendant un transport du dispositif de soudage (100) le long d'une direction de fonctionnement (OD) dans un plan de soudage (WP), et
une tête de sonde (120) agencée en amont de la tête de soudage (110) par rapport à la direction de fonctionnement (OD), la tête de sonde (120) étant configurée pour mesurer un ensemble de propriétés géométriques d'un espace (G) entre les pièces à usiner (P1, P2) de manière à permettre un positionnement de la tête de soudage (110) pour atteindre une application souhaitée du matériau de soudage dans l'espace (G), dans lequel le dispositif de soudage (100) comprend des premiers moyens d'ajustement (310) configurés pour permettre à une position de la tête de sonde (120) d'être modifiée angulairement par rapport à une position de la tête de soudage (110) en faisant tourner au moins une parmi la tête de sonde (120) et la tête de soudage (110) autour d'un premier axe (A1) orienté sensiblement perpendiculairement par rapport au plan de soudage (WP),
**caractérisé en ce que** les premiers moyens d'ajustement comprennent une articulation (310) et des moyens de commande, dans lequel le premier axe (A1) passe à travers l'articulation (310), les moyens de commande comprennent une tige (320) et des points de fixation flexibles respectifs d'interconnexion (330, 335) sur la tête de soudage (110) et la tête de sonde (120), dans lequel
les moyens de commande comprennent en outre des boulons de verrouillage (340, 345) agencés sur la tige (320) et pouvant être commandés manuellement via un outil approprié pour permettre de fixer la distance entre la tête de sonde (120) et la tête de soudage (110), et ainsi de verrouiller la tête de sonde (120) par rapport à la tête de soudage (110) sur un angle particulier (α1) par rapport au premier axe (A1), ou
les moyens de commande comprennent en outre un moteur électrique (350) agencé sur la tige (320) et configuré pour faire tourner la tige (320), en réponse à un signal maître (Sₘ), le signal maître (Sₘ) étant basé sur l'ensemble mesuré de propriétés géométriques de l'espace (G),
dans lequel une rotation de la tige (320) fait varier le premier angle (a1) des premiers moyens d'ajustement (310).

2. Dispositif de soudage (100) selon la seconde option de la revendication 1, dans lequel le moteur électrique (350) est adapté pour ajuster de manière adaptative la relation angulaire entre la tête de sonde (120) et la tête de soudage (110) lors d'un transport du dispositif de soudage (100) le long de la direction fonctionnement (OD), de telle sorte que cette relation varie par rapport à l'angle (α1) par rapport au premier axe (A1).

3. Dispositif de soudage (100) selon l'une quelconque des revendications précédentes, dans lequel la tête de sonde (120) comprend deux éléments de capteur primaires (S_{R}, S_{L}) configurés pour enregistrer des données représentant au moins un sous-ensemble de l'ensemble des propriétés géométriques de l'espace (G) entre les pièces à usiner (P1, P2), chacun des éléments capteurs primaires (S_{R}, S_{L}) étant configuré pour être en contact avec une paroi respective (W1, W2) des deux pièces à usiner (P1, P2) contiguë à l'espace (G) lors du transport du dispositif de soudage (100) le long de la direction de fonctionnement (OD).

4. Dispositif de soudage (100) selon la revendication 3, dans lequel une extrémité proximale (S_{Rp}, S_{Lp}) de chacun des éléments de capteur primaires (S_{R}, S_{L}) est fixée de manière pivotante à un élément central (125) de la tête de sonde (120), chacun des éléments de capteur primaires (S_{R}, S_{L}) comprenant une extrémité distale (S_{Rd}, S_{Ld}), la tête de sonde (120) comprenant en outre au moins un élément élastique (510) configuré pour exercer une force de répulsion sur les éléments de capteur primaires (S_{R}, S_{L}) les uns par rapport aux autres de manière à amener les extrémités distales (S_{Rd}, S_{Ld}) à maintenir le contact avec la paroi contiguë respective (W1, W2) lors du transport du dispositif de soudage (100) le long de la direction de fonctionnement (OD) tout en permettant une variation de distances latérales (d_{R}, d_{L}) entre une électrode (E1) de la tête de sonde (120) et les parois contiguës (W1, W2).

5. Dispositif de soudage (100) selon l'une quelconque des revendications 1 à 2, dans lequel la tête de sonde (120) comprend des moyens de capteur optique configurés pour enregistrer sans contact des données représentant au moins un sous-ensemble de l'ensemble des propriétés géométriques de l'espace entre les pièces à usiner (P1, P2).

6. Dispositif de soudage (100) selon l'une quelconque des revendications précédentes, comprenant des seconds moyens d'ajustement configurés pour faire tourner la tête de soudage (110) par rapport à la tête de sonde (120) autour d'un second axe (A2) de telle sorte que la tête de soudage (110) atteint un angle d'inclinaison (α2) par rapport à la tête de sonde (120), le second axe (A2) étant orienté sensiblement parallèlement au plan de soudage (WP).

7. Dispositif de soudage (100) selon l'une quelconque des revendications précédentes, comprenant un canal de flux (140) configuré pour appliquer un flux dans l'espace (G) entre les pièces à usiner (P1, P2), le canal de flux (140) ayant une sortie (141) qui est disposée en amont de la tête de soudage (110) et en aval de la tête de sonde (120) par rapport à la direction de fonctionnement (OD).

8. Dispositif de soudage (100) selon l'une quelconque des revendications précédentes, dans lequel la tête de soudage (110) comprend en outre au moins une sortie de fil (111, 112) qui est configurée pour administrer l'alimentation d'au moins un fil d'électrode consommable (E1, E2) jusque dans l'espace (G) entre les pièces à usiner (P1, P2).
